# EUROPÄISCHE PATENTSCHRIFT

(11) **EP 3 090 922 B1**
(45) Veröffentlichungstag und Bekanntmachung des Hinweises auf die Patenterteilung: **28.11.2018**
(21) Anmeldenummer: 16164677.3
(22) Anmeldetag: 11.04.2016
(51) Int. Cl.: B62D 13/00, B62D 13/02, B62D 13/04

(54) **VERFAHREN ZUR LENKUNG EINES LANDWIRTSCHAFTLICHEN ANHÄNGERS UND LANDWIRTSCHAFTLICHER ZUGVERBUND**
METHOD FOR GUIDING AN AGRICULTURAL TRAILER AND AGRICULTURAL TRAILER COMBINATION
PROCEDE DE DIRECTION D'UNE REMORQUE AGRICOLE ET ENSEMBLE DE TRACTION

(30) Priorität: 14.04.2015 DE 102015206689
(43) Veröffentlichungstag der Anmeldung: 09.11.2016
(73) Patentinhaber: HORSCH LEEB Application Systems GmbH, 94562 Oberpöring (DE)
(72) Erfinder: Rothmund, Matthias, 92421 Schwandorf (DE); Bosch, Johannes, 89547 Gerstetten (DE)
(74) Vertreter: Benninger, Johannes

(56) Entgegenhaltungen:
- EP-A1- 2 145 813
- DE-A1-102010 028 015
- GB-A- 2 142 291
- US-A1- 2003 167 107

## Beschreibung

Die vorliegende Erfindung betrifft ein Verfahren zur Lenkung eines Anhängers mit den Merkmalen des unabhängigen Anspruchs 1 sowie einen landwirtschaftlichen Zugverbund mit den Merkmalen des unabhängigen Anspruchs 9.

Um bei Pflanzenschutzmaßnahmen mit gezogenen Feldspritzen die überfahrene Fläche möglichst gering zu halten, ist es wünschenswert, dass die von einem Zugfahrzeug gezogene Feldspritze bzw. der vom Zugfahrzeug gezogene Anhänger möglichst exakt hinter den Hinterrädern des Zugfahrzeuges fährt, d.h. dass die Räder der Feldspritze bzw. des Anhängers in der Spur des Zugfahrzeuges fahren. Besonders bei der Fahrt einer Kurve tritt das Problem auf, dass der gezogene Anhänger bzw. die Feldspritze einen kleineren Kurvenradius fährt und die vom Zugfahrzeug vorgegebene Bahn abkürzt und somit neue Fahrspuren definiert.

Im Stand der Technik sind bereits einige Lösungen zur spurgetreuen Nachführung eines Anhängers hinter einem Zugfahrzeug bekannt, indem beispielsweise der Abstand zwischen Hinterachse und Kupplungspunkt die gleiche Länge wie die Deichsellänge des Anhängers aufweist. Sind diese Abstände zwischen Hinterachse und Kupplungspunkt jedoch zu groß, dann ergibt sich bei nicht konstanten Bewegungsradien ein Bahnfehler zwischen Zugfahrzeug und Anhänger, was u.a. bei Kurvenein- und Kurvenausfahrt regelmäßig der Fall ist.

Weiterhin ist es bekannt, zur spurgetreuen Verfolgung des Zugfahrzeuges die Bewegung des Zugfahrzeuges bzw. des Gesamtsystems von Zugfahrzeug und Anhänger zu erfassen, beispielsweise durch Sensoren und/oder Messung der relativen Bewegungen des Zugfahrzeuges und/oder des Gesamtsystems. Bei bekannter Laufbahn des Zugfahrzeugs kann dann ein optimaler Einschlagswinkel für den Anhänger in einer Kurve ermittelt werden, um der vom Zugfahrzeug vorgegebenen Bahn zu folgen. Beispielsweise kann die Fahrzeuggeometrie verwendet werden, um über eine Tangentenbestimmung der gefahrenen Kurve einen Ausgleichswinkel für die Räder des Anhängers zu bestimmen. Methoden dieser Art setzen entweder Sensoren auf dem ziehenden Zugfahrzeug voraus oder erfordern eine andere Art der Erfassung des Gesamtsystems von Zugfahrzeug und Anhänger.

Die Verwendung von Sensoren zur spurgetreuen Nachführung eines gattungsgemäßen Anhängers wird durch die DE 603 19 896 T2 sowie durch US 2003/0167107 A1 offenbart. Einer Lenkvorrichtung zugeordnete Mittel dienen einer Erfassung der von der Zugmaschine eingeschlagenen Bahn. Die Mittel setzen sich aus einem Winkeldetektor und einem Geschwindigkeitssensor zusammen. Der Winkeldetektor ist vorzugsweise im Bereich des Anhängepunkts angeordnet, während der Geschwindigkeitssensor mit dem Anhänger verbunden ist. Über eine Auswertung der erfassten Werte mittels der Sensoren können Aktoren für ein entsprechendes Stellmoment sorgen.

Die EP 1 081 020 B1 offenbart eine Lenkvorrichtung für landwirtschaftliche Anhänger. Über Sensoren, die dem Zugfahrzeug und dem Anhänger zugeordnet sind, erhält die Steuervorrichtung fortlaufend Eingangssignale, die es in Ausgangssignale zur Steuerung der Einstellung einer Knickdeichsel bzw. einer Achsschenkellenkung umsetzt.

Die Nachteile existierender Lösungen bestehen darin, dass hierbei die Bewegungen des Zugfahrzeuges und des Anhängers ermittelt werden müssen, um anhand dieser Informationen eine Aussage über den Bewegungsablauf des Gesamtsystems treffen zu können. Um dies zu erreichen, sind in der Regel eine Kommunikation und/oder eine sensorische Verbindung zwischen Zugfahrzeug und Anhänger erforderlich. Dies verursacht beim An-und Abkuppeln des Anhängers an das Zugfahrzeugs einen zusätzlichen Aufwand. Ebenso haben sich derartige Anhängersteuerungen als aufwendig und kostenintensiv erwiesen.

Der Erfindung liegt die Aufgabe zugrunde, eine Anhängersteuerung eines von einem Zugfahrzeug gezogenen Anhängers zur Verfügung zu stellen, welcher der Spur des Zugfahrzeuges möglichst ohne einer zusätzlichen Kommunikation und/oder einer sensorischen und/oder einer mechanischen Verbindung zwischen Zugfahrzeug und Anhänger folgen und die auf einfache Weise realisiert werden kann. Eine weitere Aufgabe vorliegender Erfindung kann darin gesehen werden, einen landwirtschaftlichen Zugverbund mit den genannten Vorteilen zur Verfügung zu stellen. Weitere vorteilhafte Ausgestaltungen werden durch die Unteransprüche beschrieben.

Das erfindungsgemäße Verfahren zur Lenkung eines von einem Zugfahrzeug gezogenen Anhängers mit wenigstens einer lenkbaren Achse, wobei das Zugfahrzeug und der Anhänger mittels einer Zugvorrichtung in einem Anhängepunkt miteinander verbunden sind, kann eine Bewegung des Anhängers mit mindestens einer ausschließlich dem Anhänger funktional und/oder räumlich zugeordneten Sensoreinheit erfassen und die Sensordaten während einer Fahrbewegung des Zugfahrzeuges und des Anhängers zur Gewinnung von Steuerdaten für die Lenkung der wenigstens zwei Räder der Anhängers auswerten. Darüber hinaus kann der Einschlagwinkel der wenigstens lenkbaren zwei Räder und/oder der Zugdeichsel des Anhängers auf Grundlage einer aus den Sensordaten errechneten Bahn des Zugfahrzeuges zur annähernden Verfolgung der Bahn des Zugfahrzeuges durch den variablen Lenkeinschlag der Räder des Anhängers berechnet werden.

Da die Sensoreinheit ausschließlich dem Anhänger funktional und/oder räumlich zugeordnet ist, besteht vorteilhafterweise keine Notwendigkeit mehr, den Zustand des Gesamtsystems und damit die Bewegung des Gesamtsystems erfassen zu müssen. Die dem Anhänger mindestens eine funktional und/oder räumlich zugeordnete Sensoreinheit kann vorzugsweise am Rahmen des Anhängers positioniert sein. Anhand der Anhängerbewegung bzw. seiner erfassten Laufbahn oder Teile davon kann dann die Bewegung des ziehenden Zugfahrzeuges hinreichend genau bestimmt werden, so dass bei bekannter Position und Orientierung des Anhängers mit dessen Deichsellänge der Anhängepunkt des Zugfahrzeugs bestimmt werden kann. Die Position des Zugfahrzeuges kann somit eingegrenzt werden, wobei bei Betrachtung einzelner Messungen die Position des Zugfahrzeuges durchaus noch Mehrdeutigkeiten aufweisen kann. Bei Betrachtung des zeitlichen Verlaufs der einzelnen Positionen sowie der Lageveränderungen des Anhängers kann ferner die Bahnkurve des Zugfahrzeuges hinreichend genau ermittelt werden. Anhand der errechneten Bahnkurve ist damit auch die Bewegung des Zugfahrzeuges bekannt, so dass anhand der gewonnenen Daten der Einschlagwinkel des Anhängers bzw. die individuellen Einschläge der wenigstens zwei Räder berechnet werden können. Mittels der beschriebenen Lösung ist es möglich, dass der Anhänger die Bahn des Zugfahrzeuges basierend auf seinen Bewegungsdaten folgt, d. h. das Verfahren zur Kurvenlenkung eines Anhängers basiert ausschließlich auf Grundlage der erfassten Anhängerbewegung. Zur Bestimmung der Bahn des Zugfahrzeuges muss auch der aktuelle Lenkeinschlag der wenigstens zwei Räder und/oder der Zugdeichsel des Anhängers erfasst werden, welcher bei der Berechnung der Einschlagwinkel mit einfließt.

Zusammenfassend zeichnet sich die erfindungsgemäße Vorrichtung dahingehend aus, dass die Bahn eines jeden Punktes des Anhängers bestimmt werden kann. Ist der Anhängepunkt zu jedem Zeitpunkt bekannt, kann die durch das Zugfahrzeug vorgegebene Bahn zu jedem Programmzyklus bestimmt werden. Die zu verfolgende Bahn kann in einer lokalen, zwei- oder höherdimensionalen Karte eingetragen und gespeichert werden. Mittels der mindestens einen ausschließlich dem Anhänger funktional und/oder räumlich zugeordneten Sensoreinheit kann die Bewegung des Anhängers, d.h. die aktuelle Position des Anhängers erfasst werden.

Die aktuelle Position des Anhängers und dessen Anhängepunkt können ebenfalls in der lokalen, zwei- oder höherdimensionalen Karte eingetragen werden. Auf Grundlage der aktuellen Position des Anhängers und dessen Anhängepunkts kann der Einschlagwinkel der mindestens zwei Räder und/oder der Zugdeichsel berechnet werden. Dadurch kann der Anhänger der vom Zugfahrzeug vorgegebenen Bahn folgen und/oder bei möglichen Abweichungen zu dieser Bahn zurückgeführt werden.

Sofern sämtliche Positionen des Zugfahrzeugs und des Anhängers bekannt sind, kann eine Bahnabweichung, bedingt durch ein träges Lenkverhalten des Anhängers, berechnet werden. Diese Bahnabweichung kann durch eine verbesserte Lenkwinkelregelung oder durch einen zusätzlichen Vorhaltewinkel, der zur gewünschten Bahn lenkt, minimiert werden.

Vorteile ergeben sich u.a. in diesem Sinne, dass keine mechanische Verbindung zwischen dem Zugfahrzeug und dem Anhänger zur Winkelerfassung bei vorliegender Erfindung erforderlich ist. Ebenso ist auch keine elektrische Verbindung bspw. in Form eines Gyroskops am Zugfahrzeug anzubringen, da die Bestimmung der Position des Anhängers über eine ausschließlich dem Anhänger zugeordnete Sensoreinheit erfolgt.

Eine Weiterbildung der Erfindung sieht vor, dass die Bewegung des Anhängers mittels wenigstens eines Gyroskops und/oder Beschleunigungssensors erfasst werden kann.

Hervorzuheben ist, dass das wenigstens eine Gyroskop und/oder die Beschleunigungssensoren dem Anhänger zugeordnet ist/sind. Diese können am Anhänger fest und/oder abnehmbar angeordnet sein. Das wenigstens eine Gyroskop kann vorzugsweise am Rahmen des Anhängers positioniert sein. Vorteilhaft ist, dass mittels des Gyroskops Richtungsänderungen des Anhängers gemessen werden können, so dass hinsichtlich der mittels Wegmesssystem und/oder Geschwindigkeitssensor gemessenen zurückgelegten Strecke im Umkehrschluss eine Bahnbestimmung des Zugfahrzeuges möglich ist. Mögliche Richtungsänderungen des Anhängers können sich durch eine Kurvenfahrt und/oder bei einem Wendevorgang des Zugfahrzeugs ergeben. Mittels des wenigstens einen Gyroskops kann bei einer Kurvenfahrt die Drehgeschwindigkeit des Anhängers um die Hochachse erfasst werden. Drehgeschwindigkeit des Anhängers erfasst werden. Die translatorische Bewegung kann hingegen an mindestens einem Rad des Anhängers abgenommen werden. Grundsätzlich kann aber mittels des Gyroskops die Drehgeschwindigkeit des Anhängers um die Hochachse zu jedem Zeitschritt, insbesondere auch bei einer Geradeausfahrt, erfasst werden.

Weitere konkrete Sensoren können Inertialsensoren und/oder Sensoren zur Bestimmung der Geschwindigkeit und/oder Beschleunigung sein. Weiterhin kann jegliche andere Art der Erfassung angewendet werden, die die Bewegung des gezogenen Anhängers im zwei- oder höherdimensionalen Raum beschreibt. Die gewonnenen Sensordaten des Anhängers können anschließend von einer Steuer- und/oder Regeleinheit für die Lenkung der wenigstens zwei Räder bzw. der Achse des Anhängers oder der Zugdeichsel ausgewertet werden, so dass anschließend der Einschlagwinkel der mindestens zwei Räder des Anhängers oder der Zugdeichsel zur Verfolgung der Bahn der Zugfahrzeuges berechnet werden kann. Anhand diesem Ergebnis kann durch den Aktor zur Auslenkung der wenigstens zwei Räder bzw. Achse des Anhängers oder der Zugdeichsel des Anhängers ein entsprechendes Stellelement generiert werden.

Es kann auch vorgesehen sein, dass die Bewegung des Anhängers mittels wenigstens eines Wegmesssystems und/oder Geschwindigkeitssensors erfasst wird.

Das wenigstens eine Wegmesssystem und/oder Geschwindigkeitssensor ist ausschließlich dem Anhänger zugeordnet, welches fest und/oder abnehmbar ausgebildet sein kann. Weiterhin kann jegliche andere Art der Erfassung angewendet werden, die die Bewegung des gezogenen Anhängers im zwei- oder höherdimensionalen Raum beschreibt.

Es kann auch vorgesehen sein, dass die Position und/oder die Bewegung des Anhängers mit einem ausschließlich dem Anhänger funktional und/oder räumlich zugeordneten Positionsbestimmungssystem erfasst werden.

Im Rahmen dieses Verfahrens kann die Position des Anhängers beispielsweise mittels GPS erfasst werden, so dass ständig die aktuelle Position des Anhängers ausgesendet wird. Vorteilhaft ist auch, dass im Rahmen des Positionsbestimmungssystems beispielsweise mittels GPS Rückschlüsse auf die Geschwindigkeit des Anhängers gezogen werden können. Die gemessen Daten können dabei von der Steuer- und/oder Regeleinheit hinsichtlich der Berechnung der Einschlagwinkel der wenigstens zwei Räder und/oder der Zugdeichsel des Anhängers ausgewertet werden. Zur Bestimmung der Bahn des Zugfahrzeuges muss auch der aktuelle Lenkeinschlag der wenigstens zwei Räder und/oder der Zugdeichsel des Anhängers erfasst werden, welcher bei der Berechnung der Einschlagwinkel mit einfließt. Derartige Positionsbestimmungssysteme können am Anhänger fest und/oder abnehmbar angeordnet sein.

Eine zweckmäßige Weiterbildung sieht vor, dass die Sensordaten von der Sensoreinheit während einer Fahrbewegung des Zugfahrzeuges in regelmäßigen Abständen aktualisiert werden.

Durch die Bewegung des Zugfahrzeugs bewegt sich folglich auch der Anhänger kontinuierlich weiter. Um die annähernde Verfolgung der Bahn des Zugfahrzeuges zu ermöglichen, ist es notwendig, die Position des Anhängers regelmäßig abzufragen. Veränderungen in der Position des Anhängers können direkt erfasst und ausgewertet werden, so dass aufgrund dessen eine Berechnung der Einschlagwinkel der mindestens zwei Räder und/oder der Zugdeichsel erfolgen kann. Die Abstände zur Aktualisierung der Sensordaten entsprechen in der Regel einem definierten Zeitabstand. Vorteilhaft ist auch, dass eine Trägheit des Systems im Hinblick auf die Auslenkung der wenigstens zwei Räder und/oder der Zugdeichsel des Anhängers berücksichtigt werden kann.

Gemäß einer Weiterbildung der Erfindung kann eine Lenkbewegung des Anhängers bei Erfassung der Bewegung des Anhängers durch die Sensoreinheit in Echtzeit durchgeführt werden.

Im Rahmen dieser Ausführungsform der Erfindung ist es möglich, die Bewegung und die Position des Anhängers in Echtzeit zu erfassen, um daraus eine Lenkbewegung des Anhängers durchzuführen. Die Echtzeit-Daten kann die Sensoreinheit nutzen, um Rückschlüsse über die aktuelle Position und die Bewegung des Anhängers schließen zu können und um daraus den Einschlagwinkel der wenigstens zwei Räder und/oder der Zugdeichsel des Anhängers berechnen zu können.

Eine Weiterbildung der Erfindung sieht vor, dass die Lenkung der wenigstens zwei Räder und/oder der Zugdeichsel des Anhängers auf Basis der errechneten Bewegungsdaten des Anhängers durchgeführt wird.

Vorteilhaft ist, dass anhand der berechneten Einschlagwinkel und durch den variablen Lenkeinschlag der Räder des Anhängers auf Basis der zuvor erfassten Bewegungsdaten des Anhängers die Lenkung der wenigstens zwei Räder und/oder der Zugdeichsel des Anhängers erfolgt. Somit wird erreicht, dass die wenigstens zwei Räder und/oder die Zugdeichsel des Anhängers durch ein durch den Aktor erzeugtes Stellelement derart ausgelenkt werden, dass sie der Bahn des Zugfahrzeuges folgen.

Es kann auch vorgesehen sein, dass die Lenkbewegung des Anhängers gegensinnig zur Kurvenfahrt des Zugfahrzeuges vorgenommen wird.

Aufgrund der gegensinnigen Auslenkung des Anhängers entspricht die Bahn des Anhängers den gleichen Radius wie die Bahn des Zugfahrzeuges, d.h. der Anhänger fährt mit seinen Rädern dieselben Kurvenradien bzw. Bahn wie die Hinterräder des ziehenden Zugfahrzeuges. Ansonsten würde der Anhänger, bedingt durch seine gezogene Bewegung, einen kleineren Kurvenradius wählen und innerhalb der vom Zugfahrzeug vorgegebenen Bahnkurve abgekürzt fahren.

Weiter umfasst die Erfindung einen landwirtschaftlichen Zugverbund mit einem Zugfahrzeug sowie einen via das Zugfahrzeug gezogenen Anhänger mit wenigstens einer lenkbaren Achse und/oder einer lenkbaren Zugdeichsel, wenigstens eine Sensoreinheit, die ausschließlich dem Anhänger funktional und/oder räumlich zugeordnet ist und Bewegungen des Anhängers erfassen kann, wenigstens einen Aktor, über welchen eine Lenkbewegung der Achse und/oder der Zugdeichsel bewirkbar ist, eine Steuer- und/oder Regeleinheit, die mit der wenigstens einen Sensoreinheit und dem wenigstens einen Aktor in Verbindung steht, wobei die Steuer- und/oder Regeleinheit derart ausgebildet ist, dass diese unter Berücksichtigung der über die wenigstens eine Sensoreinheit erfassten Bewegung des Anhängers den wenigstens einen Aktor für eine definierte Bewegung der wenigstens einen lenkbaren Achse und/oder einer Zugdeichsel ansteuern kann, so dass ein jeweiliges an die lenkbare Achse gekoppeltes Rad des Anhängers zumindest näherungsweise in einer Fahrspur des Zugfahrzeuges bewegbar ist.

Vorteilhaft ist, dass eine Anhängersteuerung geschaffen wird, so dass sich der gezogene Anhänger auf derselben Bahn wie sein Zugfahrzeug bewegt, ohne dabei mit dem Zugfahrzeug kommunizieren und/oder die Bewegung des Gesamtsystems von Zugfahrzeug und Anhänger anderweitig erfassen zu müssen. Die Nachverfolgung der Spur des Zugfahrzeugs wird allein mit der Erfassung der Anhängerbewegung und dessen Bewegungsdaten ermöglicht. Dabei ist ausschließlich dem Anhänger wenigstens eine Sensoreinheit funktional und/oder räumlich zugeordnet, d.h. mit der mindestens einen ausschließlich dem Zugfahrzeug funktional und/oder räumlich zugeordneten Sensoreinheit ist die Bahn eines jeden Punktes des Anhängers und dessen Anhängepunkt bestimmbar. Da dadurch der Anhängepunkt und damit die aktuelle Position des Anhängers zu jedem Zeitpunkt bekannt sind, kann die durch das Zugfahrzeug vorgegebene Bahn mittels der mindestens einen Sensoreinheit zu jedem Programmzyklus bestimmt werden. Die zu verfolgende Bahn und die aktuelle Position des Anhängers und dessen Anhängepunkt können in einer lokalen, zwei- oder höherdimensionalen Karte hinterlegt und gespeichert werden. Die ermittelten Sensordaten können daraufhin von der Steuer- und/oder Regeleinheit in eine Lenkbewegung über wenigstens einen Aktor umgesetzt werden, indem ein Einschlagwinkel der mindestens zwei Räder und/oder der Zugdeichsel berechnet wird. Der wenigstens eine Aktor kann mindestens einen Zylinder umfassen, welcher hydraulisch und/oder elektrisch angesteuert werden kann. Aufgrund dessen kann durch den Aktor jeweils ein Stellelement der wenigstens zwei Räder der lenkbaren Achse und/oder der lenkbaren Zugdeichsel erzeugt werden, um den zuvor berechneten Einschlagwinkel gegensinnig zur Kurvenfahrt des Zugfahrzeuges und eine Drehbewegung der wenigstens zwei Räder bzw. der Achse oder des Anhängers bewirken zu können.

Sofern sämtliche Positionen des Zugfahrzeugs und des Anhängers bekannt sind, kann eine Bahnabweichung, bedingt durch ein träges Lenkverhalten des Anhängers, berechnet werden. Diese Bahnabweichung kann durch eine verbesserte Lenkwinkelregelung oder durch einen zusätzlichen Vorhaltewinkel, der zur gewünschten Bahn lenkt, minimiert werden.

Eine zweckmäßige Weiterbildung der Erfindung sieht vor, dass die mindestens eine am Anhänger funktional und/oder räumlich zugeordnete Sensoreinheit als Bewegungs- und/oder Geschwindigkeitssensoren und/oder ein Gyroskop umfassen kann.

Um die Bewegung des Anhängers durch das Zugfahrzug erfassen zu können, sind dem Anhänger beispielsweise verschiedene Arten von Sensoren, u.a. in Form von Bewegungs- und/oder Geschwindigkeitssensoren zugeordnet. Ebenso kann jegliche andere Art der Erfassung angewendet werden, die die Bewegung des Anhängers im zwei- oder höherdimensionalen Raum beschreibt. Um die Bahn des Zugfahrzeuges hinreichend genau bestimmen zu können, ist auch erforderlich, dass der aktuelle Lenkeinschlag der wenigstens zwei Räder der lenkbaren Achse und/oder der lenkbaren Zugdeichsel zusätzlich erfasst wird. Im Rahmen der vorliegenden Erfindung ist es somit möglich, anhand den ermittelten Bewegungsdaten des Anhängers eine zumindest näherungsweise Verfolgung der Fahrspur des Zugfahrzeuges zu erreichen, indem durch den wenigstens einen Aktor jeweils ein Stellelement zur Auslenkung der wenigstens zwei Räder der Achse und/oder der Zugdeichsel bewirkt wird. Derartige Sensoreinheiten können dem Anhänger fest und/oder abnehmbar zugeordnet sein.

Es kann auch vorgesehen sein, dass die mindestens eine ausschließlich am Anhänger funktional und/oder räumlich zugeordnete Sensoreinheit als ein Positionsbestimmungssystem ausgebildet ist.

Weiterhin ist es vorteilhaft, die Bewegung des Anhängers mittels diverser Positions- und Lagebestimmungsverfahren zu erfassen und daraufhin eine Lenkung der wenigstens einen lenkbaren Achse und/oder einer Zugdeichsel des Anhängers durchzuführen. Als Positionsbestimmungssystem kann beispielsweise GPS zum Einsatz kommen, so dass die jeweilige Position und Geschwindigkeit des Anhängers kontinuierlich erfasst werden kann. Derartige Systeme können am Anhänger fest und/oder abnehmbar angeordnet sein.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Figur 1 zeigt eine schematische Ansicht eines Zugverbundes gemäß der vorliegenden Erfindung;
Figur 2 verdeutlicht einzelne Schritte zur Umsetzung des erfindungsgemäßen Verfahrens.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie das erfindungsgemäße Verfahren oder die erfindungsgemäße Vorrichtung ausgestaltet sein können und stellen keine abschließende Begrenzung dar.

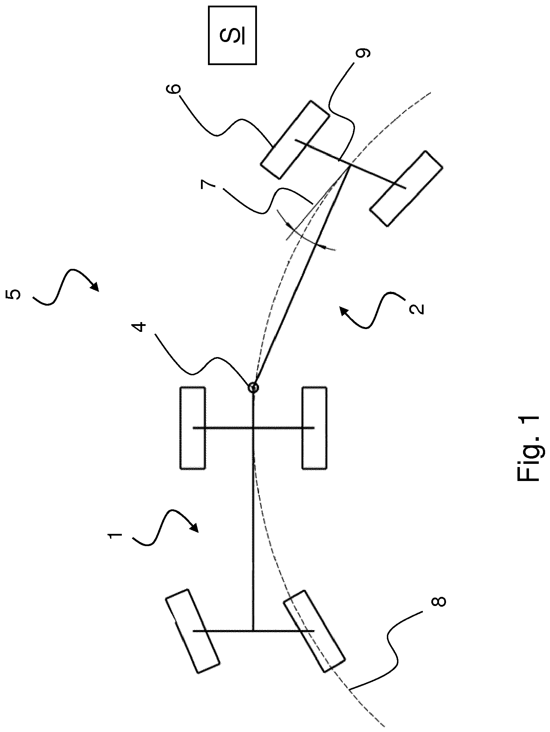

Figur 1 zeigt einen Zugverbund 5 mit einem Zugfahrzeug 1 und einem via das Zugfahrzeug 1 gezogenen Anhänger 2 mit wenigstens einer lenkbaren Achse 9 in einer Linkskurve. Das Zugfahrzeug 1 und der Anhänger 2 sind dabei mittels einer Zugvorrichtung in einem Anhängepunkt 4 miteinander verbunden. Dem Anhänger 2 ist wenigstens eine Sensoreinheit (hier nicht dargestellt) räumlich und/oder funktional zugeordnet, welche die Bewegung des Anhängers 2 erfasst. Die wenigstens eine Sensoreinheit ist vorzugsweise dem Rahmen des Anhängers zugeordnet und als Gyroskop ausgebildet. Mittels des Gyroskops wird zu jedem Zeitschritt die Drehgeschwindigkeit des Anhängers 2 um die Hochachse erfasst. Die translatorische Geschwindigkeit wird zugleich an mindestens einem Rad des Anhängers 2 abgenommen.

Weiterhin umfasst der Zugverbund 5 einen Aktor mittels dessen eine Lenkbewegung der lenkbaren Achse 9 erfolgen kann, und eine Steuer- und/oder Regeleinheit S, die in Verbindung mit der wenigstens einen Sensoreinheit und dem wenigstens einen Aktor steht. Die Steuer-und/oder Regeleinheit S ist derart ausgebildet, dass diese aufgrund der durch die Sensoreinheit erfassten Bewegung des Anhängers 2 den wenigstens einen Aktor für eine definierte Bewegung der wenigstens einen lenkbaren Achse 9 ansteuern kann. Hierzu wird auf Grundlage der Sensordaten der Einschlagwinkel 7 der wenigstens zwei Räder 6 des Anhängers 2 berechnet, um eine zumindest annähernde Verfolgung der Bahn 8 des Zugfahrzeuges 1 zu erreichen. Mittels dem Aktor wird ein Stellelement erzeugt, so dass die wenigstens eine lenkbare Achse 9 den berechneten Einschlagwinkel 7 einschlägt. Dabei erfolgt die Lenkbewegung auf Basis der errechneten Bewegungsdaten des Anhängers 2 gegensinnig zur Kurvenfahrt bzw. Bahn 8 des Zugfahrzeuges 1, so dass die wenigstens zwei Räder 6 des Anhängers 2 der Bahn 8 des Zugfahrzeuges 1 folgen. Aufgrund der Aktualisierung der Sensordaten von der Sensoreinheit während einer Fahrbewegung des Zugfahrzeuges in regelmäßigen Zeitabständen ist es möglich, die Bahn des Zugfahrzeuges 1 bzw. die zu folgende Bahn sowie die Bahn und Position des Anhängers 2 kontinuierlich zu bestimmen und die Einschlagwinkel 7 kontinuierlich entsprechend zu korrigieren und/oder anzupassen.

In Figur 1 beispielsweise fährt das Zugfahrzeug 1 eine Linkskurve, die wenigstens zwei Räder 6 des Anhängers 2 hingegen werden durch die Regel- und/oder Steuereinheit S nach rechts ausgelenkt. Entsprechendes gilt auch umgekehrt bei einer Rechtskurve.

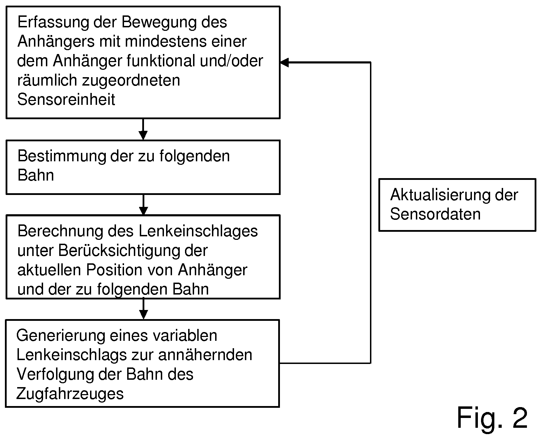

Figur 2 verdeutlicht einzelne Schritte zur Umsetzung des erfindungsgemäßen Verfahrens zur Lenkung eines von einem Zugfahrzeug 1 gezogenen Anhängers 2 mit wenigstens einer lenkbaren Achse 9, wobei das Zugfahrzeug 1 und der Anhänger 2 mittels einer Zugvorrichtung in einem Anhängepunkt 4 miteinander verbunden sind. Die Bewegung des von einem Zugfahrzeug 1 gezogenen Anhängers 2 wird von mindestens einer Sensoreinheit erfasst, die ausschließlich dem Anhänger 2 funktional und/oder räumlich zugeordnet ist. Bei der mindestens einen Sensoreinheit handelt es sich vorzugsweise um ein Gyroskop, um die Drehgeschwindigkeit des Anhängers 2 bei Richtungsänderungen erfassen zu können. Danach folgt die Auswertung der Sensordaten während der Fahrt des Zugfahrzeuges 1 und des Anhängers 2 zur Gewinnung von Steuerdaten. Diese Steuerdaten werden als Grundlage für die Lenkung der wenigstens zwei Räder 6 des Anhängers 2 und zur Bestimmung der Bahn des Zugfahrzeuges 1 verwendet. Es folgt die Berechnung der Einschlagwinkel 7 der mindestens zwei Räder 6 des Anhängers 2 mittels der gewonnenen Steuerdaten zur annähernden Verfolgung der Bahn 8 des Zugfahrzeuges 1. Ein variabler Lenkeinschlag der Räder 6 des Anhängers 2 wird in Gang gesetzt. Um die Lenkbewegung des Anhängers 2 ständig an dessen Position, Bewegung und Geschwindigkeit anpassen zu können, erfolgt eine Aktualisierung der Sensordaten während einer Fahrbewegung des Zugfahrzeuges 1 in regelmäßigen Zeitabständen, so dass die Bewegung des Anhängers 2 erneut erfasst wird.

Mit vorliegendem Verfahren ist die Bahn eines jeden Punktes des Anhängers 2 bestimmbar. Da der Anhängepunkt 4 zu jedem Zeitpunkt bekannt ist, kann die durch das Zugfahrzeug 1 vorgegebene Bahn 8 zu jedem Programmzyklus bestimmt werden. Die zu verfolgende Bahn 8 kann in einer lokalen, zwei- oder höherdimensionalen Karte eingetragen und gespeichert werden. Mittels der ausschließlich dem Anhänger 2 funktional und/oder räumlich zugeordneten Sensoreinheit kann die Bewegung des Anhängers, d.h. die aktuelle Position des Anhängers 2 erfasst werden. Die aktuelle Position des Anhängers 2 und dessen Anhängepunkts 4 können ebenfalls in der lokalen, zwei- oder höherdimensionalen Karte eingetragen werden. Auf Grundlage der aktuellen Position des Anhängers 2 und dessen Anhängepunkts 4 kann der Einschlagwinkel der Räder des Anhängers 2 und/oder der Zugdeichsel berechnet werden. Dadurch kann der Anhänger 2 der vom Zugfahrzeug 1 vorgegebenen Bahn 8 folgen und/oder bei möglichen Abweichungen zu dieser Bahn zurückgeführt werden.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

1 Zugfahrzeug
2 Anhänger
4 Anhängepunkt
5 Zugverbund
6 Räder des Anhängers
7 Einschlagwinkel
8 Bahn
9 Achse
S Steuer- und/oder Regeleinheit

## Patentansprüche

1. Verfahren zur Lenkung eines von einem Zugfahrzeug (1) gezogenen Anhängers (2), der über wenigstens eine lenkbare Achse (9) und/oder Zugdeichsel verfügt, wobei das Zugfahrzeug (1) und der Anhänger (2) mittels einer Zugvorrichtung in einem Anhängepunkt (4) miteinander verbunden sind, und wobei das Verfahren zumindest folgende Schritte umfasst:
- Erfassung einer Bewegung des Anhängers (2) auf Grundlage von Sensordaten zumindest einer ausschließlich dem Anhänger (2) funktional und/oder räumlich zugeordneten Sensoreinheit;
- Auswertung der Sensordaten während einer Fahrbewegung des Zugfahrzeuges (1) und des Anhängers (2) zur Gewinnung von Steuerdaten für die Lenkung von wenigstens zwei lenkbaren Rädern (6) und/oder der Zugdeichsel des Anhängers (2);
- Berechnen von Einschlagwinkeln (7) der mindestens zwei lenkbaren Räder (6) und/oder der Zugdeichsel des Anhängers (2) auf Grundlage einer aus den Sensordaten errechneten Bahn (8) des Zugfahrzeuges (1) und zur annähernden Verfolgung der Bahn (8) des Zugfahrzeuges (1) durch den variablen Lenkeinschlag der Räder (6) und/oder der Zugdeichsel des Anhängers (2), **dadurch gekennzeichnet, dass** eine Bewegung des Anhängers (2) mittels wenigstens eines Gyroskops und/oder wenigstens eines Beschleunigungssensors erfasst wird, wobei die ausschließlich dem Anhänger (2) funktional und/oder räumlich zugeordnete Sensoreinheit das wenigstens eine Gyroskop und/oder den wenigstens einen Beschleunigungssensor umfasst, wobei anhand der Anhängerbewegung oder seiner erfassten Laufbahn oder Teile davon eine Bahnkurve des Zugfahrzeugs (1) ermittelt oder berechnet wird, und wobei bei bekannter Position und Orientierung des Anhängers (2) mit dessen Deichsellänge der Anhängepunkt (4) des Zugfahrzeugs (1) bestimmt wird.

2. Verfahren nach Anspruch 1, bei dem die Bewegung des Anhängers mittels wenigstens eines Wegmesssystems und/oder wenigstens eines Geschwindigkeitssensors erfasst wird.

3. Verfahren nach Anspruch 1 oder 2, bei dem eine Position des Anhängers (2) mit einem dem Anhänger funktional und/oder räumlich zugeordneten Positionsbestimmungssystem erfasst wird.

4. Verfahren nach einem der Ansprüche 1 bis 3, bei dem die Sensordaten von der Sensoreinheit während einer Fahrbewegung des Zugfahrzeuges (1) in regelmäßigen, zyklischen und/oder vorgegebenen zeitlichen Abständen aktualisiert werden.

5. Verfahren nach einem der Ansprüche 1 bis 4, bei dem eine Lenkbewegung des Anhängers (2) in Echtzeit oder annähernd in Echtzeit bei der Erfassung der Bewegung des Anhängers (2) durch die Sensoreinheit durchgeführt wird.

6. Verfahren nach einem der Ansprüche 1 bis 5, bei dem die Lenkung der wenigstens zwei Räder (6) und/oder der Zugdeichsel des Anhängers (1) auf Basis der errechneten Bewegungsdaten des Anhängers (2) durchgeführt wird.

7. Verfahren nach einem der Ansprüche 1 bis 6, bei dem die Lenkbewegung des Anhängers (2) gegensinnig zur Kurvenfahrt des Zugfahrzeuges (1) vorgenommen wird.

8. Landwirtschaftlicher Zugverbund (5), der zumindest durch ein Zugfahrzeug (1) sowie durch einen vom Zugfahrzeug (1) gezogenen Anhänger (2) mit wenigstens einer lenkbaren Achse (9) und/oder Zugdeichsel gebildet ist, wobei der Zugverbund (5) weiterhin mindestens die folgenden Komponenten umfasst:
- wenigstens eine Sensoreinheit, die dem Anhänger (2) funktional und/oder räumlich zugeordnet ist und Bewegungen des Anhängers (2) erfassen kann;
- wenigstens einen Aktor, über welchen eine Lenkbewegung der Achse (9) und/oder Zugdeichsel bewirkbar ist;
- eine Steuer- und/oder Regeleinheit (S), die mit der wenigstens einen Sensoreinheit und dem wenigstens einen Aktor in Wirkverbindung steht, wobei die Steuer- und/oder Regeleinheit (S) derart ausgebildet ist, dass diese unter Berücksichtigung der über die wenigstens eine Sensoreinheit erfassten Bewegung des Anhängers (2) den wenigstens einen Aktor für eine definierte Bewegung der wenigstens einen lenkbaren Achse (9) und/oder Zugdeichsel ansteuern kann, so dass ein jeweiliges an die lenkbare Achse (9) gekoppeltes Rad des Anhängers (2) zumindest näherungsweise in einer Fahrspur des Zugfahrzeuges (1) bewegbar ist, **dadurch gekennzeichnet, dass** die mindestens eine ausschließlich dem Anhänger (2) funktional und/oder räumlich zugeordnete Sensoreinheit durch Bewegungs- und/oder Geschwindigkeitssensoren gebildet ist und/oder ein Gyroskop umfasst, wobei anhand der Anhängerbewegung oder seiner erfassten Laufbahn oder Teile davon eine Bahnkurve des Zugfahrzeugs (1) ermittelbar oder berechenbar ist, und wobei bei bekannter Position und Orientierung des Anhängers (2) mit dessen Deichsellänge der Anhängepunkt (4) des Zugfahrzeugs (1) bestimmbar ist.

9. Landwirtschaftlicher Zugverbund nach Anspruch 8, bei dem die mindestens eine ausschließlich dem Anhänger (2) funktional und/oder räumlich zugeordnete Sensoreinheit als ein Positionsbestimmungssystem ausgebildet ist.

10. Landwirtschaftlicher Zugverbund nach Anspruch 8, bei dem die mindestens eine ausschließlich dem Anhänger (2) funktional und/oder räumlich zugeordnete Sensoreinheit durch ein Wegmesssystem und/oder durch einen Geschwindigkeitssensor gebildet ist.

## Claims

1. A method for steering a trailer (2) towed by a towing vehicle (1), the trailer (2) having at least one steerable axle (9) and/or drawbar, wherein the towing vehicle (1) and the trailer (2) are connected to each other at a hitch point (4) by means of a towing device, and wherein the method comprises at least following steps:
- detecting a movement of the trailer (2) based on sensor data from at least one sensor unit that is functionally and/or spatially associated exclusively with the trailer (2);
- analysing the sensor data during a driving movement of the towing vehicle (1) and of the trailer (2) for the purpose of obtaining control data for steering at least two steerable wheels (6) and/or the drawbar of the trailer (2);
- calculating steering angles (7) of the at least two steerable wheels (6) and/or of the drawbar of the trailer (2) based on a path (8) of the towing vehicle (1) as calculated from the sensor data and for approximately following the path (8) of the towing vehicle (1) by the variable steer angle of the wheels (6) and/or of the drawbar of the trailer (2), **characterised in that** a movement of the trailer (2) is detected by means of at least one gyroscope and/or of at least one acceleration sensor, wherein the sensor unit that is functionally and/or spatially associated exclusively with the trailer (2) comprises the at least one gyroscope and/or the at least one acceleration sensor, wherein a trajectory of the towing vehicle (1) is ascertained or calculated on the basis of the trailer movement or of the trailer's detected running path or parts thereof, and wherein the hitch point (4) of the towing vehicle (1), with the position and orientation of the trailer (2) being known, is determined by the trailer's drawbar length.

2. The method as recited in claim 1, with the movement of the trailer being detected by means of at least one path-measuring system and/or of at least one speed sensor.

3. The method as recited in claim 1 or 2, with a position of the trailer (2) being detected by a positioning system that is functionally and/or spatially associated with the trailer.

4. The method as recited in one of the claims 1 to 3, with the sensor data from the sensor unit being updated during a driving movement of the towing vehicle (1) at regular, cyclic, and/or specified temporal intervals.

5. The method as recited in one of the claims 1 to 4, with a steering movement of the trailer (2) being carried out in real time or approximately in real time upon the movement of the trailer (2) being detected by the sensor unit.

6. The method as recited in one of the claims 1 to 5, with the steering of the at least two wheels (6) and/or of the drawbar of the trailer (2) being carried out based on the calculated movement data of the trailer (2).

7. The method as recited in one of the claims 1 to 6, with the steering movement of the trailer (2) being performed in the opposite direction to the cornering of the towing vehicle (1).

8. An agricultural tractor-trailer combination (5) being formed by at least a towing vehicle (1), as well as by a trailer (2) being towed by the towing vehicle (1), the trailer having at least one steerable axle (9) and/or drawbar, wherein the tractor-trailer combination (5) furthermore comprises at least the following components:
- at least one sensor unit that is functionally and/or spatially associated with the trailer (2) and that can detect the movements of the trailer (2);
- at least one actuator by way of which a steering movement of the axle (9) and/or drawbar is effectible;
- a control unit and/or regulating unit (S) that is in operative connection with the at least one sensor unit and the at least one actuator, wherein the control unit and/or regulating unit (S) is designed such that it can control the at least one actuator in consideration of the trailer (2) movement as detected by way of the at least one sensor unit for the purpose of a specified movement of the at least one steerable axle (9) and/or drawbar such that a particular trailer (2) wheel coupled to the steerable axle (9) is at least approximately movable in a wheel rut of the towing vehicle (1), **characterised in that** the at least one sensor unit that is functionally and/or spatially associated exclusively with the trailer (2) is formed by motion sensors and/or by speed sensors and/or comprises a gyroscope, wherein a trajectory of the towing vehicle (1) is ascertainable or calculable on the basis of the trailer movement or of the trailer's detected running path or parts thereof, and wherein the hitch point (4) of the towing vehicle (1), with the position and orientation of the trailer (2) being known, is determinable by the trailer's drawbar length.

9. The agricultural tractor-trailer combination as recited in claim 8, with the at least one sensor unit that is functionally and/or spatially associated exclusively with the trailer (2) being designed as a positioning system.

10. The agricultural tractor-trailer combination as recited in claim 8, with the at least one sensor unit that is functionally and/or spatially associated exclusively with the trailer (2) being formed by a path-measuring system and/or by a speed sensor.

## Revendications

1. Procédé de direction d'une remorque (2) remorquée par un véhicule tracteur (1), laquelle dispose d'au moins un essieu susceptible d'être dirigé (9) et/ou d'un timon d'attelage, le véhicule tracteur (1) et la remorque (2) étant reliés l'un à l'autre au moyen d'un dispositif de remorquage en un point d'attelage (4) et le procédé comprenant au moins les étapes suivantes :
- détection d'un mouvement de la remorque (2) sur la base de données de capteur d'une unité de captage associée exclusivement à la remorque (2) en fonctionnalité et/ou dans l'espace ;
- analyse des données de capteur au cours d'un déplacement du véhicule tracteur (1) et de la remorque (2) pour obtenir des données de commande destinées à diriger au moins deux roues (6) susceptibles d'être dirigées et/ou du timon d'attelage de la remorque (2) ;
- calcul d'angles de braquage (7) des au moins deux roues (6) susceptibles d'être dirigées et/ou du timon d'attelage de la remorque (2) à partir d'une course (8) du véhicule tracteur (1) calculée avec les données de capteur, et pour suivre approximativement la course (8) du véhicule tracteur (1) par le braquage de direction variable des roues (6) et/ou du timon d'attelage de la remorque (2), **caractérisé en ce qu'**un mouvement de la remorque (2) est détecté à l'aide d'au moins un gyroscope et/ou d'au moins un capteur d'accélération, l'unité de captage associée exclusivement à la remorque (2) en fonctionnalité et/ou dans l'espace comprenant le(s) gyroscope(s) et/ou le(s) capteur(s) d'accélération, une courbe dans la course du véhicule tracteur (1) étant déterminée ou calculée à partir du mouvement de la remorque ou de son parcours détecté ou de parties de celui-ci, et le point d'attelage (4) du véhicule tracteur (1) étant déterminé pour une position et une orientation connues de la remorque (2) avec sa longueur de timon.

2. Procédé selon la revendication 1, dans lequel le mouvement de la remorque est détecté au moyen d'au moins un capteur de position et/ou d'au moins un capteur de vitesse.

3. Procédé selon la revendication 1 ou 2, dans lequel une position de la remorque (2) est détectée avec un système de détermination de position associé en fonctionnalité et/ou dans l'espace à la remorque.

4. Procédé selon l'une quelconque des revendications 1 à 3, dans lequel les données de capteur de l'unité de captage sont actualisées à intervalles de temps réguliers, cycliques et/ou prédéfinis au cours d'un déplacement du véhicule tracteur (1).

5. Procédé selon l'une quelconque des revendications 1 à 4, dans lequel un mouvement de direction de la remorque (2) est exécuté par l'unité de captage en temps réel ou approximativement en temps réel au moment de la détection du mouvement de la remorque (2).

6. Procédé selon l'une quelconque des revendications 1 à 5, dans lequel la direction des au moins deux roues (6) et/ou du timon d'attelage de la remorque (1) est exécutée sur la base des données de mouvement calculées de la remorque (2).

7. Procédé selon l'une quelconque des revendications 1 à 6, dans lequel le mouvement de direction de la remorque (2) est fait dans le sens opposé au virage pris par le véhicule tracteur (1).

8. Ensemble de traction agricole (5) formé au moins d'un véhicule tracteur (1) ainsi que d'une remorque (2) remorquée par un véhicule tracteur (1) avec au moins un essieu (9) susceptible d'être dirigé et/ou un timon d'attelage, l'ensemble de traction (5) continuant à comprendre au moins les composantes suivantes :
- au moins une unité de captage qui est associée à la remorque (2) en fonctionnalité et/ou dans l'espace et qui peut détecter des mouvements de la remorque (2) ;
- au moins un acteur par lequel un mouvement de direction de l'essieu (9) et/ou du timon d'attelage est susceptible d'être activé ;
- une unité de commande et/ou de réglage (S) qui est reliée en interaction avec l'/les unité(s) de captage et la/les acteur(s), l'unité de commande et/ou de réglage (S) étant conçue de telle sorte qu'elle peut, en tenant compte du mouvement de la remorque (2) détecté par la/les unité(s) de captage, commander le(s) acteur(s) pour un mouvement défini du/des essieu(x) (9) susceptible(s) d'être dirigé(s) et/ou du timon d'attelage pour que chaque roue de la remorque (2) couplée à l'essieu (9) susceptible d'être dirigé puisse être déplacée au moins approximativement dans une voie suivie par le véhicule tracteur (1), **caractérisé en ce que** la/les unité(s) de captage associée(s) exclusivement à la remorque (2) en fonctionnalité et/ou dans l'espace est/sont formée(s) de capteurs de mouvement et/ou de vitesse et/ou comprend/comprennent un gyroscope, une courbe de la course du véhicule tracteur (1) étant susceptible d'être déterminée ou calculée à partir du mouvement de la remorque ou de son parcours détecté ou de parties de celui-ci, et le point d'attelage (4) du véhicule tracteur (1) étant susceptible d'être déterminé pour une position et une orientation connues de la remorque (2) avec sa longueur de timon.

9. Ensemble de traction agricole selon la revendication 8, dans lequel la/les unité(s) de captage associée(s) exclusivement à la remorque (2) en fonctionnalité et/ou dans l'espace est/sont conçue(s) en tant que système de détermination de position.

10. Ensemble de traction agricole selon la revendication 8, dans lequel la/les unité(s) de captage associée(s) exclusivement à la remorque (2) en fonctionnalité et/ou dans l'espace est/sont constituée(s) d'un capteur de position et/ou d'un capteur de vitesse.
